# EUROPEAN PATENT SPECIFICATION

(11) **EP 2 371 688 B1**
(45) Date of publication and mention of the grant of the patent: **04.11.2015**
(21) Application number: 11250281.0
(22) Date of filing: 10.03.2011
(51) Int. Cl.: B62J 17/00

(54) **Motorcycle cowl structure**
Motorradverkleidungsstruktur
Structure de capot pour motocyclette

(30) Priority: 25.03.2010 JP 2010070314
(43) Date of publication of application: 05.10.2011
(73) Proprietor: Honda Motor Co., Ltd., Minato-ku Tokyo 107-8556 (JP)
(72) Inventor: Okubo, Takefumi, Wako-shi Saitama 351-0193 (JP)
(74) Representative: Stevens, Jason Paul

(56) References cited:
- EP-A2- 1 170 201
- EP-A2- 1 514 782
- DE-A1- 3 420 352

## Description

The present invention relates to an improvement in a motorcycle cowl structure.

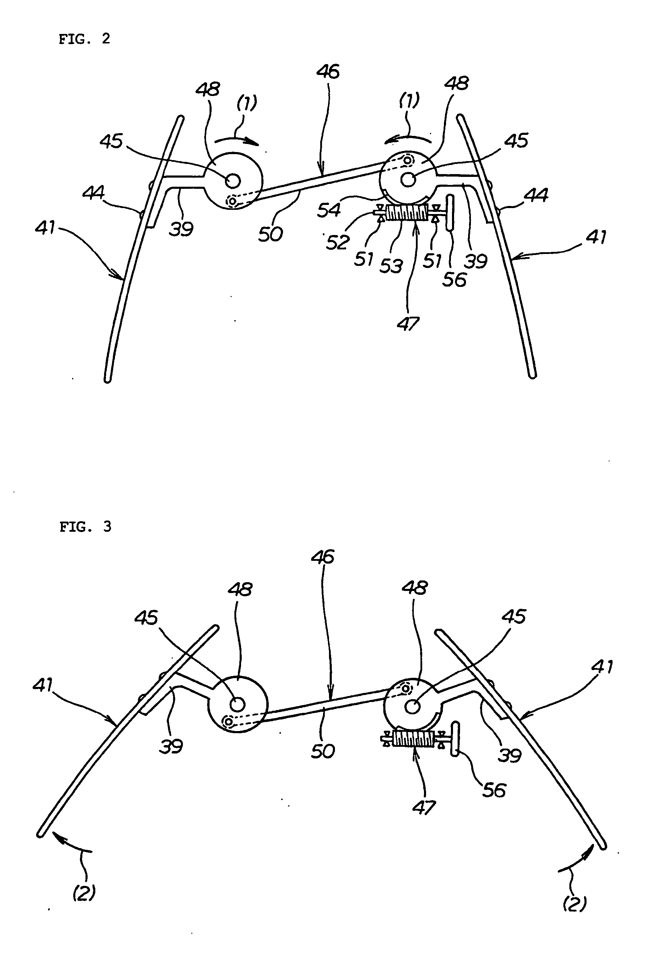

Some motorcycles are equipped with a cowling (also sometimes called a cowl), which has a role of enhancing the external appearance of a vehicle and suppressing running-air flowing toward a rider. Various cowl structures have been proposed (see for example Fig. 2 of Japanese Utility Model Publication No. 3-27028).

In the cowl structure illustrated in Fig. 2 of Japanese Utility Model Publication No. 3-27028, fixed flap portions (22) (in the following, the numbers in parentheses denote reference numerals used in Japanese Utility Model Publication No. 3-27028) and a movable flap portion (23) are attached to a cowl main body (14) covering the front portion of a vehicle body.

The fixed flap portion (22) allows running-air to flow on the side of a vehicle to prevent the running-air from hitting a rider. When external temperature is high, the rider can open the movable flap portion (23) to introduce running air from the gap of the opening movable flap portion (23), cooling her or his own leg.

The technology of Japanese Utility Model Publication No. 3-27028 can arbitrarily control air flowing toward the rider.

The motorcycle has a single-riding mode where a rider rides alone and a tandem-riding mode where a pillion passenger (also called a passenger) rides behind the rider.

In view of the short length of a motorcycle, pillion passengers frequently assume a mounting posture gripping the waist of a rider with her or his own knees. As viewed from the front of the vehicle, the knee caps, leg portions, waist and flanks of the pillion passenger are located on the outside of the vehicle widthwise.

The movable flap portion (23) in Japanese Utility Model Publication No. 3-27028 is adapted to cover the rider but is not adapted to cover the knee cap, leg portion, waist and flank of the pillion passenger.

In other words, the conventional cowl structure does not serve to shield a pillion passenger from the wind.

However, in situations where high-speed tandem riding is allowed, a cowl structure capable of suppressing running-air flowing toward a pillion passenger is desired.

EP 1514782 describes another cowl structure. In this document an air flow control system is disclosed, which includes a flap configured to cover a part of a body of the motorcycle and a drive device configured to drive the flap such that the flap changes an airflow along the body of the motorcycle during travelling.

It is an object of at least the preferred embodiments of the present invention to provide a motorcycle cowl structure that can suppress running-air flowing toward a rider and a pillion passenger, whether the rider travels alone or whether a pillion passenger is also carried.

According to a first aspect of the invention, there is provided a cowl structure for a motorcycle comprising left and right cowl main body portions and left and right movable cowl portions provided on the respective left and right cowl main body portions so as to be movable in the direction of width of the vehicle, whereby: the cowl structure can suppress running-air flowing toward a rider sitting on a rider seat and a pillion passenger sitting on a pillion passenger seat; said left and right cowl main body portions are adapted to prevent running-air from hitting one or more of the knee portions, thighs, a waist and flanks of the rider; said left and right movable cowl portions can be opened to prevent running-air from hitting one or more of the knee portions, thighs, a waist and flanks of the pillion passenger; and the movable cowl portion is provided with a movable side opening having almost the same shape as that of a main body side opening, the movable side opening being configured to conform with the main body side opening in the state where the movable cowl portion overlaps the cowl main body portion, said state being the state where the movable cowl portion is closed.

When riding on the motorcycle alone, the rider closes the movable cowl portions. The cowl main body portions can prevent running-air from hitting the knee portions, thighs, waist and flanks of the rider. However, the movable cowl portions are closed, and so there is no need to worry about an increase in air resistance.

When the rider and the pillion passenger are both riding on the motorcycle, the movable cowl portions are opened. Therefore, the movable cowl portions prevent running-air from hitting the knee portions, thighs, waist and flanks of the pillion passenger.

Thus, the running-air flowing toward the rider and the pillion passenger can be suppressed in the case where the rider travels alone or in the case where a pillion passenger is also riding on the vehicle.

In a preferred form, the left movable cowl portion is interlocked with the right movable cowl portion.

Since the left movable cowl portion is interlocked with the right movable cowl portion, both of them are moved at the same time, and there is no difference in operating characteristics between the left and right movable cowl portions. Therefore, a balance between the left and right of the vehicle can be kept satisfactory.

Preferably, the left and right movable cowl portions are mechanically coupled to each other by means of a link mechanism.

Since the left and right movable cowl portions are mechanically interlinked with each other, their operation becomes more reliable. In addition, the link mechanism can have a simple configuration and a compact structure.

In an alternative preferred form, the left and right movable cowl portions are mechanically interlinked with each other by means of a winding transmission mechanism.

Since the left and right movable cowl portions are mechanically interlinked with each other, their operation becomes more reliable. In addition, because of its flexibility, the winding transmission mechanism provides a configuration having satisfactory anti-vibration performance.

In a further preferred form, the left and right movable cowl portions are provided with respective left and right actuators and can be opened and closed in conjunction with each other or individually.

Since the left and right movable cowl portions are provided with respective left and right actuators, a structure with a satisfactory left-right weight balance can be provided.

Preferably, the actuator is an electric motor or a cylinder unit. Such an actuator can be fitted inside the cowl compactly, thereby reducing the overall size of the structure.

In an alternative preferred form, the actuator is a rack and pinion mechanism or a worm wheel mechanism driven by the electric motor.

Since the rack and pinion mechanism or the worm wheel mechanism is interposed between the movable cowl portion and the electric motor, a reduction ratio can be provided and the electric motor can be reduced in size.

Preferred embodiments of the invention will now be described by way of example only, and with reference to the accompanying drawings, in which:
Fig. 1 is a perspective view of a motorcycle.
Fig. 2 is a plan view of a portion of a cowl structure according to a first embodiment;
Fig. 3 is a view for assistance in explaining the operation of movable cowl portions;
Fig. 4 is a view for assistance in explaining a windbreak function for a rider;
Fig. 5 is a view for assistance in explaining a windbreak function for a pillion passenger;
Fig. 6 is a plan view of a portion of a cowl structure according to a second embodiment;
Fig. 7 is a plan view of a portion of a cowl structure according to a third embodiment;
Fig. 8 is a plan view of a portion of a cowl structure according to a fourth embodiment;
Fig. 9 is a plan view of a portion of a cowl structure according to a fifth embodiment; and
Fig. 10 is a plan view of a portion of a cowl structure according to a sixth embodiment.

Embodiments of the present invention will hereinafter be described with reference to the accompanying drawings. It is to be noted that the drawings should be viewed based on the direction of reference numerals. In addition, the terms "front", "back" or "rear", "left" and "right" denote directions as seen by a rider sitting on a seat.

A first embodiment of the present invention is first described with reference to the drawings.

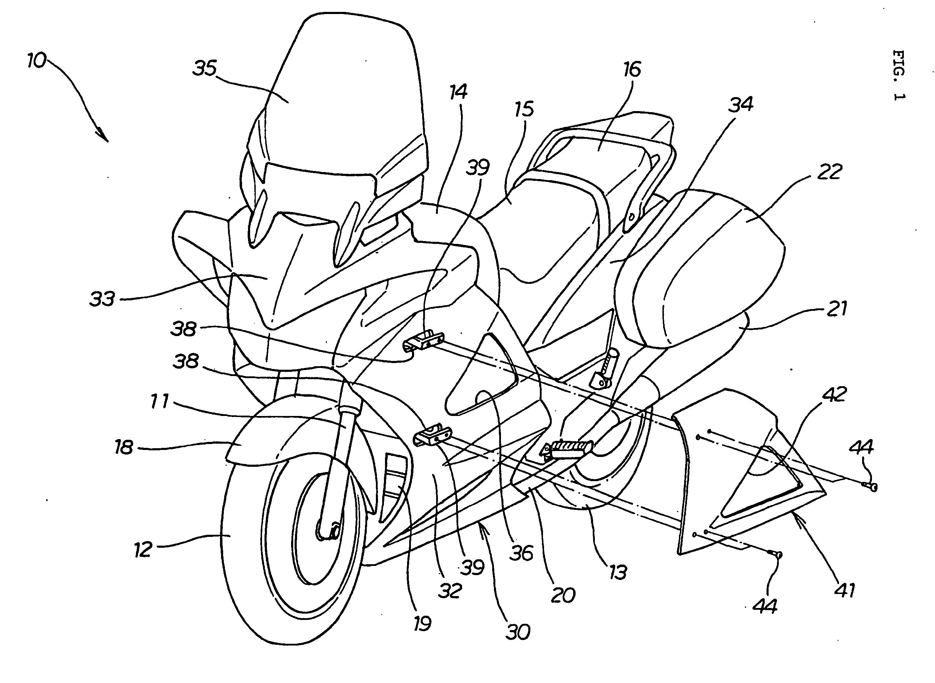

Referring to Fig. 1, a motorcycle 10 is a straddle-ride type vehicle on which a rider and a pillion passenger ride by straddling a vehicle body.

The motorcycle 10 includes a front fork 11 at a front portion of the vehicle, a front wheel 12 rotatably mounted at the lower portion of the front fork 11, and a rear wheel 13 at a rear lower portion of the vehicle. Further, the motorcycle 10 includes a fuel tank 14, a rider seat 15 on which the rider sits and the pillion passenger seat 16 on which a pillion passenger sits in this order from the upper centre to the rear of the vehicle.

A front fender 18 covering the front wheel 12 from above is mounted to the front fork 11 so as to prevent mud and water from being splashed upward. A radiator 19 is disposed rearward of the front wheel 12.

An exhaust pipe 20 extending rearward is installed on the left lateral surface of the lower portion of the vehicle body. A muffler 21 is joined to the rear portion of the exhaust pipe 20. A saddlebag 22 is disposed above the muffler 21.

A cowl 30 is mounted to the vehicle body.

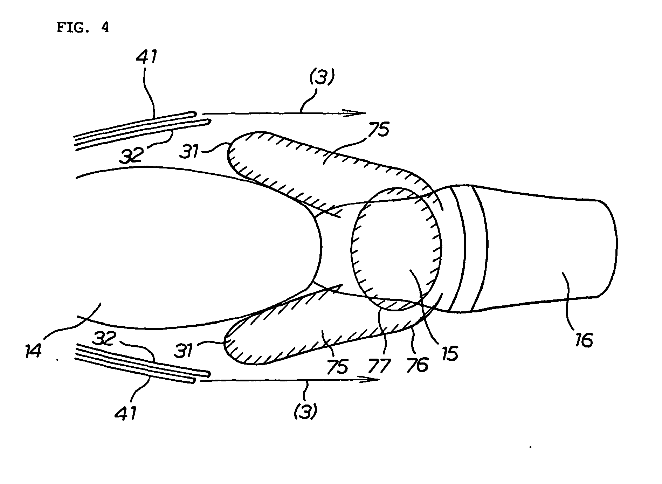

The cowl 30 includes left and right main body portions 32, a front cowl 33, and a rear cowl 34. The left and right main body portions 32 are adapted to prevent running-air from hitting one or more of the knee portions (reference numeral 31 in Fig. 4), thighs (reference numeral 75 in Fig. 4), waist (reference numeral 76 in Fig. 4) and flanks (reference numeral 77 in Fig. 4) of the rider. The front cowl 33 is disposed at a front upper portion of the cowl main body portions 32 to cover the front upper portion of the vehicle body. The rear cowl 34 is disposed below the rider seat 15 and the pillion passenger seat 16 to cover the rear upper portion of the vehicle body. A windscreen 35 is mounted on the upper portion of the front cowl 33.

The cowl main body portion 32 has a central portion which bends in the direction of width of the vehicle and is provided with main body side openings 36 at its upper portion. The main body side openings 36 have a triangular shape, tapered forwardly as viewed from the side of the vehicle body. The front ends of the left and right cowl main body portions 32 are opened to lead running-air toward a radiator 19.

The cowl main body portion 32 is formed at a front portion with a plurality of elongate holes 38 (two, at upper and lower portions on one side in the figure). An arm 39 supported at its proximal end by the vehicle body projects from each elongate hole 38. The arm 39 is L-shaped so as to project in the direction of width of the vehicle from the external surface of the cowl main body portion 32 and then bend rearward. The arm 39 can be shifted back and forth in the elongate hole 38.

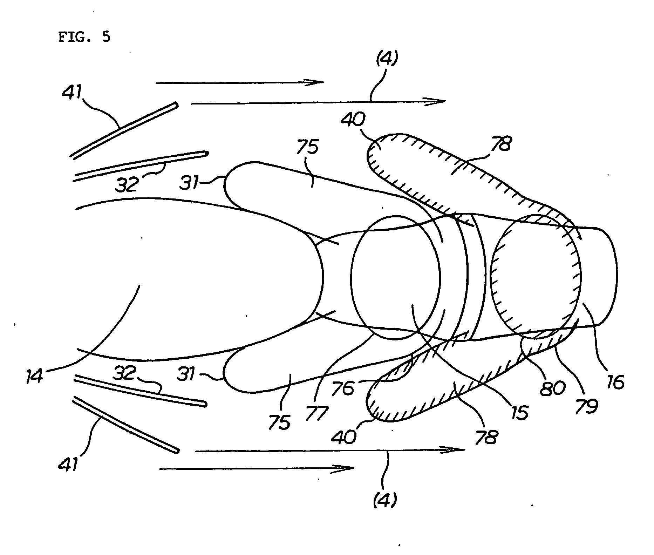

Left and right movable cowl portions 41 are provided on the respective left and right cowl main body portions 32 so as to be movable in the direction of width of the vehicle. The movable cowl portions 41 are opened to prevent running-air from hitting one or more of the knee portions (reference numeral 40 in Fig. 5), thighs (reference numeral 78 in Fig. 5), waist (reference numeral 79 in Fig. 5) and flanks (reference numeral 80 in Fig. 5) of the pillion passenger.

Each movable cowl portion 41 is shaped so as to fit along the external surface of the cowl main body portion 32 and has a trapezoidal shape as viewed from the side of the vehicle. The upper edge and lower edge of the movable cowl portion 41 are formed to extend in the back and forth direction of the vehicle. The movable cowl portion 41 has a front edge formed to extend in a vertical direction and a rear edge tilted downward as it goes toward the rear of the vehicle.

The movable cowl portion 41 is provided with a side opening 42 having almost the same shape as that of the main body side opening 36. The side opening 42 is designed to conform with the main body side opening 36 in the state where the movable cowl portion 41 overlaps the cowl main body portion 32 (in the state where the movable cowl portion 41 is closed).

A front portion of the movable cowl portion 41 is fastened to the end portions of the upper and lower arms 39 by means of a plurality of bolts 44 (two in the figure). The movable cowl portion 41 can be opened and closed by movement of the end portion of the arm 39.

An embodiment of the cowl structure of the present invention is next described in detail with reference to Fig. 2.

As illustrated in Fig. 2, support shafts 45 are provided on the vehicle body, and an arm 39 is turnably attached to each of the support shafts 45. The left and right movable cowl portions 41 are mechanically interlinked with each other by means of a link mechanism 46. The movable cowl portions 41 are driven by a worm wheel mechanism 47.

The axes of the support shafts 45 extend vertically. Each support shaft 45 supports two (upper and lower) arms (reference numeral 39 in Fig. 1), only one of which is shown in Fig. 2.

The link mechanism 46 includes swing portions 48 installed on the corresponding proximal portions of the arms 39 and a connecting bar 50 connecting the left and right swing portions 48 together.

The worm wheel mechanism 47 includes an operating shaft 52 supported by the right side of the vehicle body via bearings 51; a worm portion 53 provided on the operating shaft 52; and a wheel portion 54 installed on the right swing portion 48 and meshing with the worm portion 53. A handle 56 is attached to the operating shaft 52.

The operation of opening and closing the left and right movable cowl portions 41 is described with reference to Figs. 2 and 3.

Fig. 2 illustrates the state where the left and right movable cowl portions 41 are closed.

A rider turns the handle 56 to turn the right swing portion 48 in the direction of arrow (1) via the worm portion 53 and the wheel portion 54. The turning of the right swing portion 48 also turns the left swing portion 48 via the connecting bar 50.

As illustrated in Fig. 3, the turning of the left and right swing portions 48 opens the left and right swing cowl portions 41 in the direction of arrow (2) via the corresponding left and right arms 39. Of course, the worm wheel mechanism may instead be installed on the left swing portion 48 and the right movable cowl portion 41 may be made to interlock with the left movable cowl portion 41.

A description is next given of the function and effect of the cowl structure of the motorcycle described above.

Fig. 4 illustrates a travelling vehicle on which a single rider is mounted as viewed from above and Fig. 5 illustrates a travelling vehicle on which the rider and a pillion passenger are mounted as viewed from above.

As illustrated in Fig. 4, if travelling alone, the rider adjusts the handle (reference numeral 56 in Fig. 2) to bring the left and right movable cowl portions 41 into the state of being closed toward the cowl main body portion 32. The cowl main body portions 32 allow running-air to flow on the external sides of the rider's knee portions 31 as illustrated with arrows (3), i.e., so as not to hit the knee portions 31, thighs 75, waist 76 and flanks 77 of the rider.

Since the left and right movable cowl portions 41 are closed, they do not increase air resistance.

As illustrated in Fig. 5, if the pillion passenger also rides on the vehicle, the handle (reference 56 in Fig. 2) is adjusted to open the left and right movable cowl portions 41. The opened left and right movable cowl portions 41 allow running-air to flow on the external sides of the knee portions 40 of the pillion passenger as illustrated in arrows (4), i.e., so as not to hit the knee portion 40, thighs 78, waist 79 and flanks 80 of the pillion passenger.

Thus, whether the rider travels alone or whether a pillion passenger is also riding on the vehicle, the running-air flowing toward the rider and the pillion passenger can be suppressed.

Additionally, since the left and right movable cowl portions 41 are mechanically interlinked with each other so that they move at the same time, their behaviour becomes more reliable. Since the link mechanism has a simple configuration, its structure can be made compact.

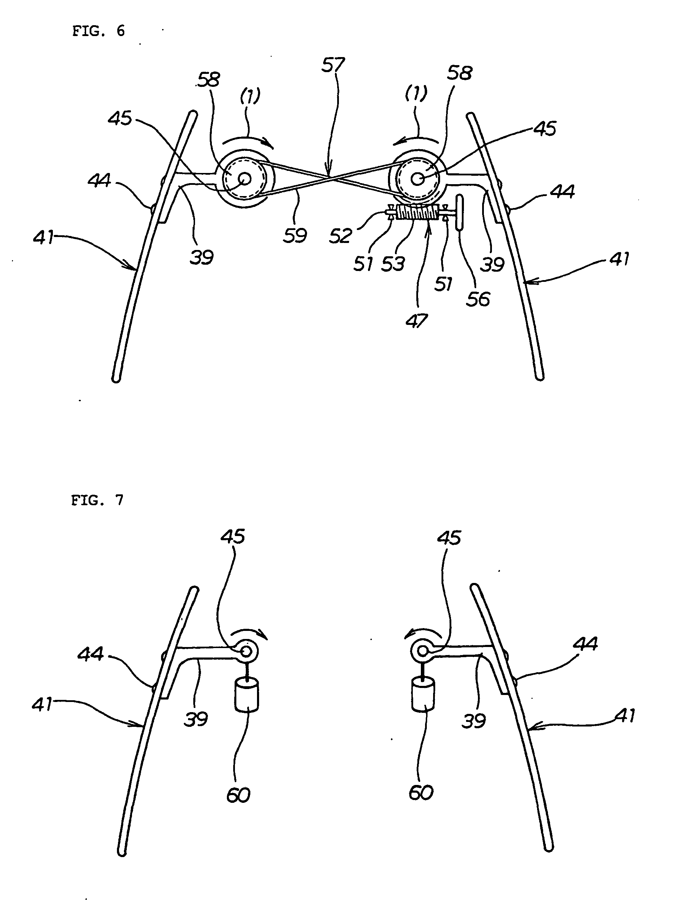

A second embodiment of the present invention is next described with reference to Fig. 6.

In the second embodiment, the left and right arms 39 are mechanically interlinked with each other by means of a winding transmission mechanism 57. The other parts of the mechanism are the same as in Fig. 2, and therefore their detailed description is omitted.

The winding transmission mechanism 57 includes pulleys 58 provided on the left and right support shafts 45, and a cross-wound wire 59 wound around the left and right pulleys 59. A belt may be used in place of the wire.

When the handle 56 is turned to turn the right pulley 58 in the direction of arrow (1), the turning force of the right pulley 58 is transmitted to the left pulley 58 via the cross-wound wire 59. In this way, the left movable cowl portion 41 is opened in conjunction with the right cowl portion 41.

Since the left and right movable cowl portions 41 are mechanically interlinked with each other, their behaviour becomes more reliable. In addition, since the winding transmission mechanism 57 having flexibility is used, anti-vibration performance is enhanced.

A third embodiment of the present invention is next described with reference to Fig. 7.

In the third embodiment, an electric motor 60 is installed on each of the left and right movable cowl portions 41, without the use of the link mechanism. Other details are the same as in Fig. 2, and so their detailed description is omitted.

The electric motor 60 is connected to the proximal portion of the arm 39. The movable cowl portion 41 is opened and closed through the turning of the arm 39 by the electric motor 60.

The left and right movable cowl portions 41 are each provided with the respective left and right electric motors 60; therefore, the structure is simpler than the structure provided with the interlink mechanism. Further, the structure has a better left-right weight balance.

Incidentally, in view of the left-right weight balance of the vehicle, the left and right electric motors 60 may electrically be controlled in an interlinked manner.

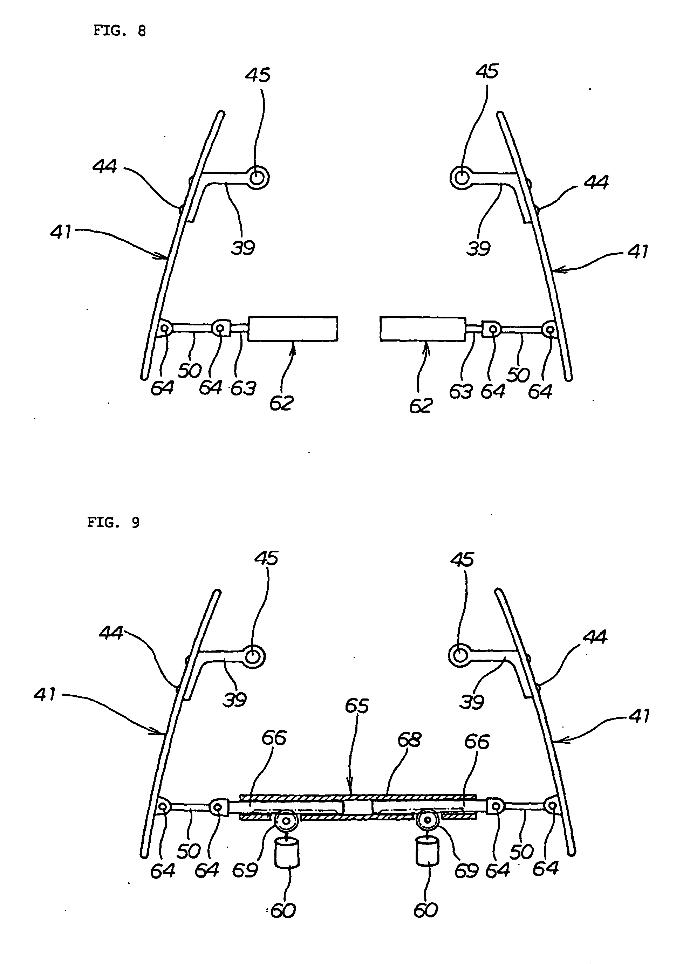

A fourth embodiment of the present invention is next described with reference to Fig. 8.

In the fourth embodiment, the left and right movable cowl portions 41 are provided with respective cylinder units 62. The other details are the same as in Fig. 7, and therefore their detailed description is omitted.

Right and left hydraulic or pneumatic cylinder units 62 are provided on the vehicle body. Each cylinder unit 62 is installed such that its axial direction extends in the direction of width of the vehicle. A push rod 63 of each of the cylinder units 62 is connected to the rear portion of the movable cowl portion 41 via a connecting rod 50 and a connecting pin 64.

Each push rod 63 is reciprocated in the vehicle-width direction to open and close the movable cowl portion 41 by rotation around the support shaft 45.

Since the left and right movable cowl portions 41 are provided with the respective left and right cylinder units 62, the structure is simpler than that provided with the interlinking mechanism. In addition, a better left-right weight balance can be achieved.

A fifth embodiment of the present invention is next described with reference to Fig. 9.

In the fifth embodiment, a rack and pinion mechanism 65 is installed in place of the cylinder units. Other details are the same as in Fig. 8, and so a detailed description is omitted.

Left and right racks 66 are installed on the vehicle body. The racks 66 are housed in respective cases 68 so as to be movable in the direction of width of the vehicle. The left and right racks 66 are each connected to the rear portion of the movable cowl portion 41 via a connecting rod 50 and a connecting pin 64 and to an electric motor 60 via a pinion 69.

The racks 66 are each moved in the direction of width of the vehicle by the electric motor 60 to open and close the movable cowl portion 41 by rotation around the support shaft 45.

Since the rack 66 and the pinion 69 are interposed between the movable cowl portion 41 and the electric motor 60, a reduction ratio can be provided and the electric motor 60 can be reduced in size.

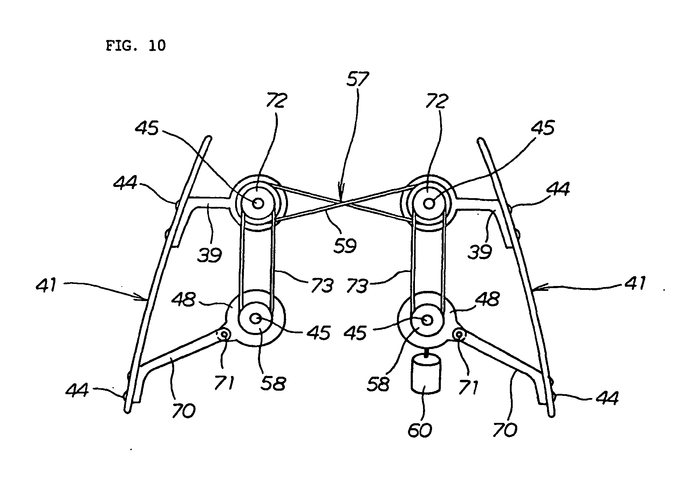

A sixth embodiment of the present invention is next described with reference to Fig. 10.

In the sixth embodiment, front and rear left and right support shafts 45 (four in total), are installed on a vehicle body. Arms 39 are supported by respective front left and right support shafts 48. On the other hand, rear arms 70 are supported by respective rear support shafts 45 on the rear side via corresponding swing portions 48 and pins 71. An electric motor 60 is connected to the right swing portion 48.

The left and right arms 39 are connected to the left and right rear arms 70 by means of a winding transmission mechanism 57. The winding transmission mechanism 57 includes: pulleys 58 installed on the respective rear left and right support shafts 45; two-step pulleys 72 installed on the front left and right support shafts 45; parallel-wound wires 73 each wound around a pulley 58 and a two-stage pulley 72; and the cross-wound wire 59 wound around the left and right two-stage pulleys 72.

The drive force of the electric motor 60 is transmitted to the left and right arms 39 and the left and right rear arms 70 by means of the winding transmission mechanism 57. The left and right arms 39 and the left and right rear arms 70 are turned around the corresponding support shafts 45 in conjunction with each other. The turning of the left and right arms 39 and left and right rear arms 70 opens and closes the left and right movable cowl portions 41.

Because power is received through the four support members (the left and right arms 39 and the left and right rear arms 70), the movable cowl portions 41 can provide stable opening and closing operation.

The cowl structure is applied to a straddle-ride type motorcycle in the present embodiment. However, such a cowl structure could equally well be applied to a scooter-type motorcycle configured such that a pillion passenger rides thereon behind a rider, as the cowl structure of the present invention is suitable for straddle-ride type vehicles.

## Claims

1. A cowl structure for a motorcycle (10) comprising left and right cowl main body portions (32) and left and right movable cowl portions (41) provided on the respective left and right cowl main body portions (32) so as to be movable in the direction of width of the vehicle, whereby:
the cowl structure can suppress running-air flowing toward a rider sitting on a rider seat (15) and a pillion passenger sitting on a pillion passenger seat (16);
said left and right cowl main body portions (32) are adapted to prevent running-air from hitting one or more of the knee portions (31), thighs (75), a waist (76) and flanks (77) of the rider;
said left and right movable cowl portions (41) can be opened to prevent running-air from hitting one or more of the knee portions (40), thighs (78), a waist (79) and flanks (80) of the pillion passenger;
and the movable cowl portion (41) is provided with a movable side opening (42) having almost the same shape as that of a main body side opening (36), the movable side opening (42) being configured to conform with the main body side opening (36) in the state where the movable cowl portion (41) overlaps the cowl main body portion (32), said state being the state where the movable cowl portion (41) is closed.

2. The cowl structure for a motorcycle according to claim 1,
wherein the left movable cowl portion (41) is interlocked with the right movable cowl portion (41).

3. The cowl structure for a motorcycle according to claim 2,
wherein the left and right movable cowl portions (41) are mechanically interlinked with each other by means of a link mechanism (46).

4. The cowl structure for a motorcycle according to claim 2,
wherein the left and right movable cowl portions (41) are mechanically interlinked with each other by means of a winding transmission mechanism (57).

5. The cowl structure for a motorcycle according to claim 1,
wherein the left and right movable cowl portions (41) are provided with respective left and right actuators and can be opened and closed in conjunction with each other or individually.

6. The cowl structure for a motorcycle according to claim 5,
wherein the actuator is an electric motor (60) or a cylinder unit (62).

7. The cowl structure for a motorcycle according to claim 5,
wherein the actuator is a rack and pinion mechanism (65) or a worm wheel mechanism (47) driven by the electric motor (60).

## Patentansprüche

1. Verkleidungsstruktur für ein Motorrad (10), welche ein linkes und rechtes Hauptverkleidungsteil (32) und ein an dem jeweiligen linken und rechten Hauptverkleidungsteil (32) vorgesehenes linkes und rechtes bewegliches Verkleidungsteil (41) aufweist, die jeweils in der Querrichtung des Fahrzeugs beweglich sind, wodurch
die Verkleidungsstruktur einen Luftstrom zu einem auf einem Fahrersitz (15) sitzenden Fahrer und einem auf einem Beifahrersitz (16) sitzenden Beifahrer unterdrücken kann;
wobei das linke und das rechte Hauptverkleidungsteil (32) ausgebildet sind, das Auftreffen eines Luftstroms auf die Knieteile (31), Oberschenkel (75), Hüfte (76) und/oder Seitenpartien (77) des Fahrers zu verhindern;
wobei das linke und das rechte bewegliche Verkleidungsteil (41) geöffnet werden kann, um das Auftreffen eines Luftstroms auf die Knieteile (40), Oberschenkel (78), Hüfte (79) und/oder Seitenpartien (80) des Beifahrers zu verhindern;
und wobei das bewegliche Verkleidungsteil (41) mit einer beweglichen Seitenöffnung (42) versehen ist, die annähernd die gleiche Form wie die einer Seitenöffnung (36) in der Hauptverkleidung aufweist, wobei die bewegliche Seitenöffnung (42) konfiguriert ist, mit der Seitenöffnung (36) in der Hauptverkleidung in dem Zustand übereinzustimmen, wenn das bewegliche Verkleidungsteil (41) das Hauptverkleidungsteil (32) überlappt, wobei dieser Zustand der Zustand ist, wenn das bewegliche Verkleidungsteil (41) geschlossen ist.

2. Verkleidungsstruktur für ein Motorrad nach Anspruch 1,
wobei das linke bewegliche Verkleidungsteil (41) mit dem rechten beweglichen Verkleidungsteil (41) verrastet ist.

3. Verkleidungsstruktur für ein Motorrad nach Anspruch 2,
wobei das linke und das rechte bewegliche Verkleidungsteil (41) mittels eines Kupplungsmechanismus (46) mechanisch miteinander gekuppelt sind.

4. Verkleidungsstruktur für ein Motorrad nach Anspruch 2,
wobei das linke und das rechte bewegliche Verkleidungsteil (41) mittels eines Windungsgetriebemechanismus (57) mechanisch miteinander gekuppelt sind.

5. Verkleidungsstruktur für ein Motorrad nach Anspruch 1,
wobei das linke und das rechte bewegliche Verkleidungsteil (41) mit jeweiligen linken und rechten Stellantrieben versehen sind und in Verbindung miteinander oder einzeln geöffnet und geschlossen werden können.

6. Verkleidungsstruktur für ein Motorrad nach Anspruch 5,
wobei der Stellantrieb ein Elektromotor (60) oder eine Zylindereinheit (62) ist.

7. Verkleidungsstruktur für ein Motorrad nach Anspruch 5,
wobei der Stellantrieb ein Zahnstangenmechanismus (65) oder ein Schneckenradmechanismus (47) ist, jeweils angetrieben von dem Elektromotor (60).

## Revendications

1. Structure de capot pour une motocyclette (10) comprenant des parties principales formant corps de capot de gauche et de droite (32) et des parties formant capots mobiles de gauche et de droite (41) disposées sur les parties principales respectives formant corps de capot de gauche et de droite (32) afin d'être mobiles dans le sens de la largeur du véhicule, de sorte que
la structure de capot peut supprimer le courant d'air s'écoulant vers le pilote assis sur la selle (15) et vers un passager arrière assis à l'arrière de la selle (16) ;
lesdites parties principales formant corps de capot de gauche et de droite (32) sont conçues pour empêche le courant d'air de frapper une ou plusieurs des parties de genou (31), des cuisses (75), de la taille (76) et des flancs (77) du pilote ;
lesdites parties formant capots mobiles de gauche et de droite (41) peuvent être ouvertes pour empêcher le courant d'air de frapper une ou plusieurs des parties de genou (40), des cuisses (78), de la taille (79) et des flancs (80) du passager arrière ;
et la partie formant capot mobile (41) est munie d'une ouverture latérale mobile (42) ayant presque la même forme que celle d'une ouverture latérale de corps principal (36), l'ouverture latérale mobile (42) étant configurée pour se conformer à l'ouverture latérale de corps principal (36) dans l'état où la partie formant capot mobile (41) chevauche la partie principale formant corps de capot (32), ledit état étant l'état dans lequel la partie formant capot mobile (41) est fermée.

2. Structure de capot pour une motocyclette selon la revendication 1,
dans laquelle la partie formant capot mobile de gauche (41) est enclenchée avec la partie formant capot mobile de droite (41).

3. Structure de capot pour une motocyclette selon la revendication 2,
dans laquelle les parties formant capots mobiles de gauche et de droite (41) sont mécaniquement liées l'une à l'autre au moyen d'un mécanisme de liaison (46).

4. Structure de capot pour une motocyclette selon la revendication 2,
dans laquelle les parties formant capots mobiles de gauche et de droite (41) sont mécaniquement liées l'une à l'autre au moyen d'un mécanisme de transmission à enroulement (57).

5. Structure de capot pour une motocyclette selon la revendication 1,
dans laquelle les parties formant capots mobiles de gauche et de droite (41) sont munies de dispositifs d'actionnement respectifs de gauche et de droite et peuvent être ouvertes et fermées en relation l'une avec l'autre ou individuellement.

6. Structure de capot pour une motocyclette selon la revendication 5,
dans laquelle le dispositif d'actionnement est un moteur électrique (60) ou une unité à vérin (62).

7. Structure de capot pour une motocyclette selon la revendication 5,
dans laquelle le dispositif d'actionnement est un mécanisme à pignon et crémaillère (65) ou un mécanisme à roue à vis sans fin (47) entraîné par le moteur électrique (60).
